# EUROPEAN PATENT SPECIFICATION

(11) **EP 1 418 110 B1**
(45) Date of publication and mention of the grant of the patent: **26.11.2008**
(21) Application number: 03019181.1
(22) Date of filing: 25.08.2003
(51) Int. Cl.: B62B 7/08

(54) **Foldable baby carriage**
Klappbarer Kinderwagen
Voiture d'enfant pliable

(30) Priority: 11.11.2002 JP 2002326253
(43) Date of publication of application: 12.05.2004
(73) Proprietor: Aprica Kassai Kabushikikaisha, Osaka-shi, Osaka 542-0082 (JP)
(72) Inventor: Kassai, Kenzou, Osaka 542-0083 (JP); Ohnishi, Ichiro c/o Aprica Kassai Kabushikikaisha, Osaka-shi Osaka 542-0082 (JP)
(74) Representative: Hofer, Dorothea

(56) References cited:
- EP-A2- 0 494 736
- DE-A1- 19 847 708
- DE-A1- 19 919 524
- US-A- 5 205 577

## Description

### BACKGROUND OF THE INVENTION

### Field of the Invention

The present invention relates to a folding baby carriage which can be folded from an open state to a closed state (folded state) and more particularly, to a folding baby carriage in which a lock of the open state is not accidentally released. A folding baby carriage according to the preamble of claim 1 is shown byEP 0 494 736 A2.

### Description of the Background Art

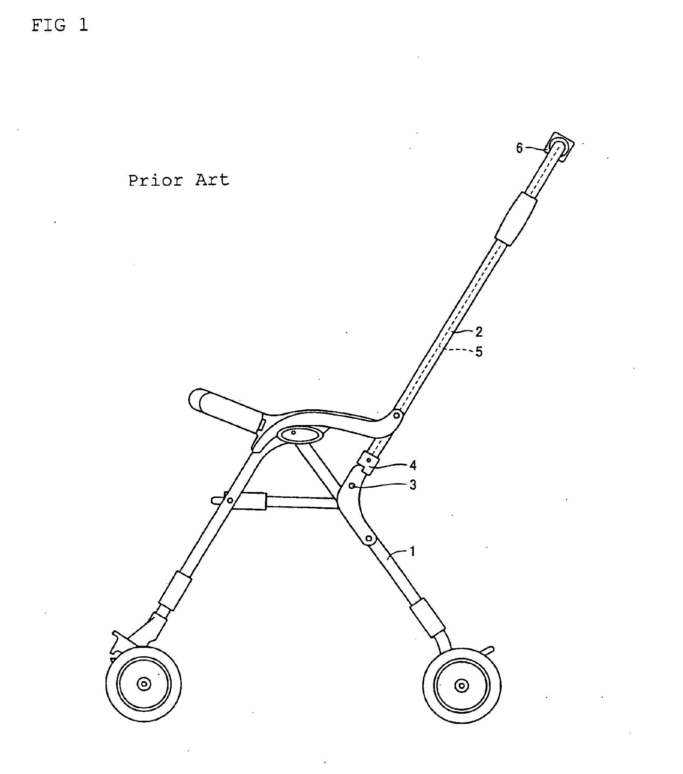

Fig. 1 illustrates a folding baby carriage disclosed in Japanese Patent Laying-Open Gazette No. 10-35507. The illustrated baby carriage comprises a reversing member 3 having one end rotatably connected to a rear leg 1 and the other end rotatably connected to a lower end of a U-shaped pushrod 2, an open-state locking member 4 which is supported on a lower region of the pushrod 2 so as to be movable upward and downward and locks an open state of the baby carriage by engaging with the reversing member 3, a wire 5 provided in the U-shaped pushrod 2 and having a lower end connected to a pair of open-state locking members 4, and an operating member 6 provided at the center of the U-shaped pushrod 2 so as to be able to pull up the wire 5.

When the wire 5 is pulled up by operating the operating member 6 and accordingly the open-state locking member 4 is moved upward, the open-state locking member 4 is disengaged from the reversing member 3 to enable transition to a folding operation of the baby carriage.

A person who moves the baby carriage always puts a hand on the pushrod. Therefore, contrary to an intension of the person who moves the baby carriage, the operating member could be accidentally touched and operated by the hand. In this case, the lock of the open state of the baby carriage is released and the baby carriage can be changed to the folding operation. If a front wheel crashes against an obstacle in this state while the baby carriage is moved, the folding operation could start while a baby is seated.

Foldable Baby carriages comprising means for securing an open state of an open-state locking member are provided in documents DE 198 47 708 A1 and DE 199 19 524 A1.

### SUMMARY OF THE INVENTION

It is an object of the present invention to provide a baby carriage in which a lock of an open state of the baby carriage is not released even when a person who moves the baby carriage accidentally operates an operating member. This object is solved by a baby carriage as defined in claim 1.

A folding baby carriage according to the present invention comprises an open-state locking member which locks an open state of a baby carriage by engaging with a part of a carriage body, an operating member which releases a lock in the open state of the baby carriage by moving the open-state locking member, and a stopper provided so as to be operationally separate from the operating means. The stopper is provided so as to be movable between a first position in which it is directly in contact with the open-state locking member to prohibit the movement of the open-state locking member and a second position in which it is separate from the open-state locking member to allow the movement of the open-state locking member.

According to the above constitution of the present invention, since the open-state locking member cannot be moved unless the stopper which is operationally separated from the operating member is moved, the lock of the open state is not released even when the operating member is accidentally operated. As a result, there can be provided a folding baby carriage which is very superior in safety.

Preferably, the folding baby carriage comprises forcing means for forcing the stopper to be brought to the fist position. Thus, in its normal used state, the stopper can be stably maintained at the first position in which the movement of the open-state locking member is prohibited by the forcing means, which is preferable in view of safety. In addition, when the baby carriage is changed from a closed state (folded state) to the open state, since the stopper automatically returns to the first position, it is prevented to forget to lock the stopper.

Instead of providing the forcing means, the stopper may be brought to the first position by its own weight when the baby carriage is in the open state. In this case, the structure of the stopper can be very simple.

According to a preferred embodiment of the present invention, the folding baby carriage comprises a handrail supporting member rotatably connected to a rear end of a handrail member, a rear leg having a rear wheel and a reversing member. The reversing member has one end rotatably connected to the rear leg and the other end rotatably connected to the handrail supporting member and performs a reversing operation in accordance with transition from the open state to the closed state of the baby carriage. The open-state locking member is provided so as to be movable upward and downward along the handrail supporting member and prohibits movement of the reversing member by engaging with the reversing member at the lower position. The stopper is supported by the handrail supporting member so as to be movable upward and downward and prohibits movement of the open-state locking member by abutting on the open-state locking member at the lower position. Here, preferably, an upper end of the stopper is rotatably connected to the handrail supporting member.

### BRIEF DESCRIPTION OF THE DRAWINGS

Fig. 1 is a side view showing a conventional baby carriage;
Fig. 2 is a side view showing an embodiment of the present invention;
Fig. 3 is a side view showing a closed state (folded state) according to the embodiment of the present invention;
Fig. 4 is a view showing an enlarged substantial part according to the embodiment shown in Fig. 2; and
Fig. 5 is a view showing a state in which a stopper was turned from a state shown in Fig. 4.

### DESCRIPTION OF THE PREFERRED EMBODIMENTS

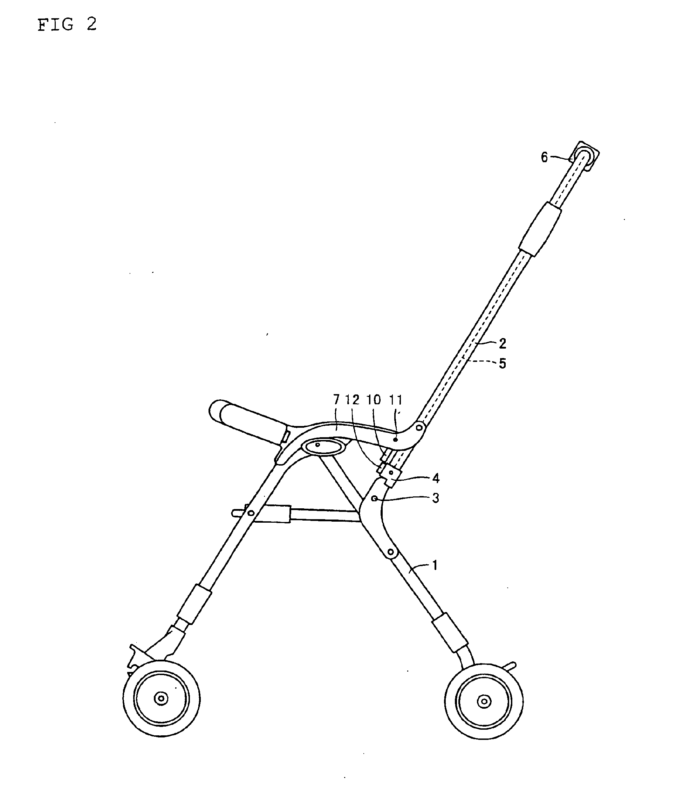

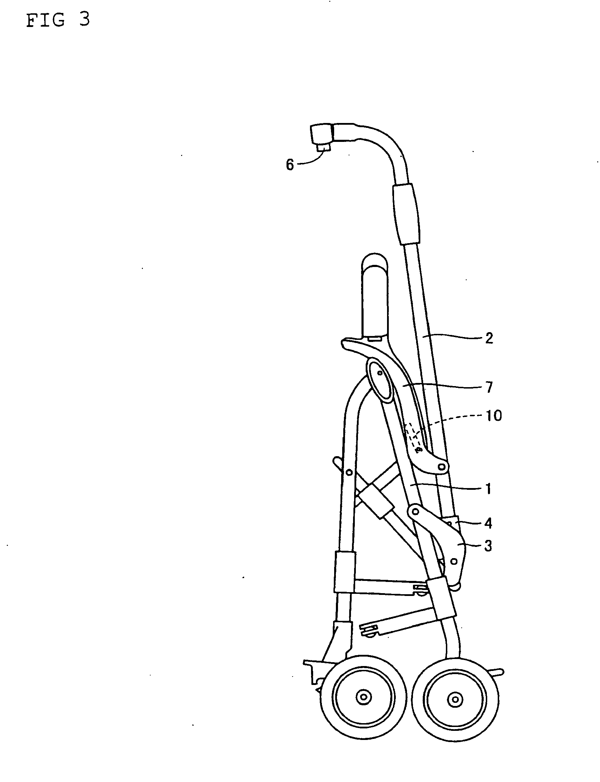

Figs. 2 to 5 illustrate an embodiment of the present invention. Fig. 2 shows an open state of a folding baby carriage and Fig. 3 shows a closed state (folded state) of the folding baby carriage. An illustrated basic frame structure is substantially the same as that shown in Fig. 1.

The illustrated folding baby carriage comprises a rear leg 1 having a rear wheel, a U-shaped pushrod 2, a reversing member 3 having one end rotatably connected to the rear leg 1 and the other end roratably connected to a lower end of the pushrod 2, and a handrail 7 having a rear end rotatably connected to the pushrod 2.

An open-state locking member 4 which is supported on a lower region of the pushrod 2 so as to be movable upward and downward is operably connected to a wire 5 extending in the pushrod 2. An operating member 6 for pulling up the wire 5 is provided at a central portion of the U-shaped pushrod 2.

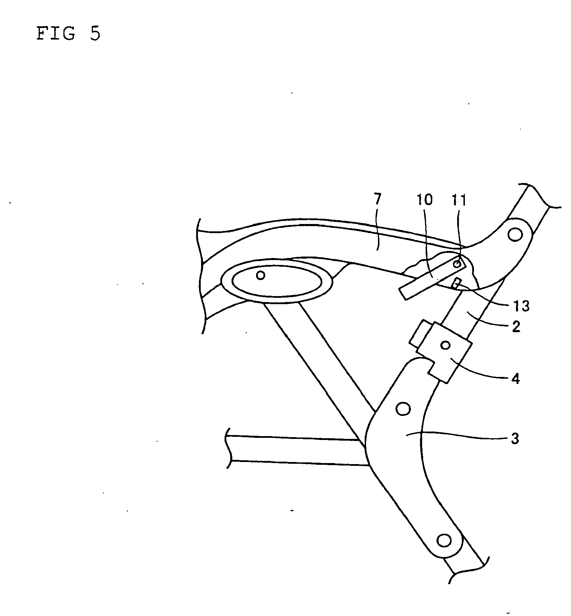

According to the open state of the baby carriage shown in Fig. 2, the open-state locking member 4 engages with the reversing member 3 and locks the open state of the baby carriage. The illustrated embodiment is characterized in that a stopper 10 for prohibiting an upward movement of the open-state locking member 4 is provided. In a case where the baby carriage is changed from the open state to a closed state, the stopper 10 is turned by hand and the operating member 6 is operated in this state as shown in Fig. 5. Then, the wire 5 is pulled up and the open-state locking member 4 is moved upward to be disengaged from the reversing member 3. Thus, the baby carriage can be changed to the closed state.

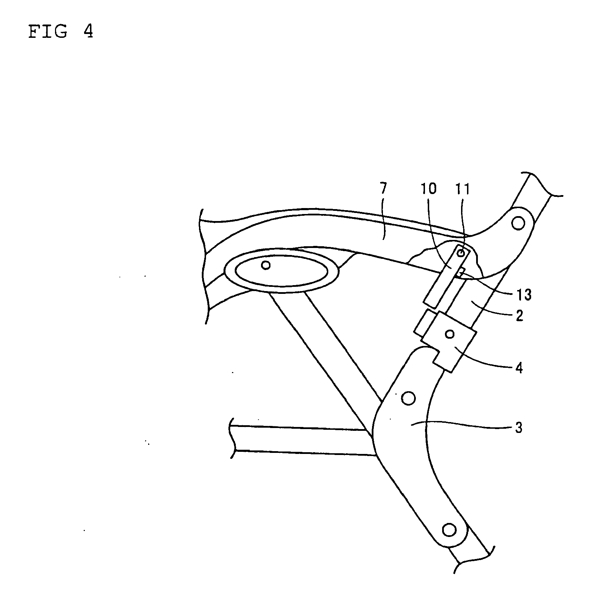

Referring to Fig. 4, a structure regarding to the stopper 10 will be described in detail.

The stopper 10 is rotatably connected to a rear portion of the handrail member 7 through an axis 11. An abutment stop 13 for prohibiting the stopper 10 from turning counterclockwise in the drawing in contact with the stopper 10 is provided at the handrail 7. The stopper 10 is disposed at a first position shown in Fig. 4 where it abuts on the abutment stop 13 by its own weight in the open state of the baby carriage. The stopper 10 is operationally separated from the operating member 6.

A plate 12 is fixed to a forward wall of the open state locking member 4. When the stopper 10 is at the first position shown in Fig. 4, the lower end of the stopper 10 is just above the plate 12. Therefore, even when a person who moves the baby carriage operates the operating member 6 by accident and the wire 5 is pulled up, since the upward movement of the open-state locking member 4 is prevented by the stopper 10, the open-state locking member 4 is not disengaged from the reversing member 3. Therefore, it is very superior in safety.

As described above, when the baby carriage is changed to the closed state, the stopper 10 is manually turned clockwise in the drawing so as to be separated from an upper portion of the plate 12 as shown in Fig. 5. In this state, the operating member 6 is operated to move the open-state locking member 4 upward so that the open-state locking member 4 is disengaged from the reversing member 3. In this state also, the operating member 6 is operated to pull up the open-state locking member 4 to fold the baby carriage. In the closed state of the baby carriage shown in Fig. 3, the stopper is positioned along the rear leg 1.

When the baby carriage is changed from the closed state to the open state, since the stopper 10 is brought to the first position shown in Fig. 2 by its own weight, it is prevented to forget to lock the stopper 10.

According to the illustrated embodiment of the present invention, when the baby carriage is changed from the open state to the closed state, it is necessary to operate the stopper 10 first and then, continuously operate the operating member 6. Since the stopper 10 is operationally separated from the operating member 6 completely and their positions arearso separated, the above two operations cannot be performed unconsciously. Therefore, there is no risk in which the open state is unlocked accidentally.

The described and illustrated embodiment is only an example of the present invention. Therefore, various kinds of modifications and changes can be provided within the present invention as defined in the claims. Some of them are illustratively described in the following.
(1) Although the stopper is returned to the position just above the plate of the open-state locking member by its own weight in the illustrated embodiment, it is not always turned and returned by its own weight. For example, the stopper may be slidably moved instead of being rotatably moved. In addition, as force to return the stopper to the position just above the plate (the first position), forcing means such as a spring having elastic force may be used instead of its own weight. Alternatively, the stopper may be manually moved between the first position and a second position (position in which movement of the open-state locking member is allowed apart from the open-state locking member).
(2) Although the open-state locking member has a plate which engages with the stopper in the illustrate embodiment, the present invention is not limited to the plate configuration. In effect, it is all right as long as the open-state locking member has a part which can engage with the stopper and the part may have any configuration.
(3) According to the illustrated embodiment of the present invention, the lower end of the pushrod is connected to the rear leg through the reserving member and the rear end of the handrail member is supported by the pushrod. As its modification, for example, if the baby carriage is such that the pushrod can be switched between pushing from the back and pushing from the front, a handrail supporting member may be provided in addition to the pushrod. The handrail supporting member has an upper end which is rotatably connected to the rear end of the handrail member and a lower end which is rotatably connected to the reversing member. The open-state locking member is provided so as to be movable upward and downward along the handrail supporting member and engages with the reversing member to prohibit the movement of the reversing member at a lower position.
(4) Although the open-state locking member is moved by the operating member through the wire in the illustrated embodiment, the wire may not be used as a method of moving the open-state locking member.
(5) According to the illustrated embodiment, the open-state locking member locks the open state of the baby carriage by engaging with the reversing member. As its modification, the folding baby carriage may not comprise the illustrated reversing member. In this case, the open-state locking member locks the open state of the baby carriage by engaging with a part of a body of the baby carriage.

## Claims

1. A folding baby carriage comprising:
a handrail member (7) ;
a handrail supporting member (2) rotatably connected to a rear end of said handrail member;
a rear leg (1) having a rear wheel; and
a reversing member (3) having one end rotatably connected to said rear leg (1) and the other end rotatably connected to said handrail supporting member (2) and performing a reversing operation in accordance with transition from the open state to a closed state of the baby carriage;
an open-state locking member (4) which is movable upward and downward along said handrail supporting member (2) and prohibits movement of said reversing member (3) by engaging with the reversing member (3) at a lower position for locking an open state of the baby carriage; and;
an operating member (6) which releases a lock in the open state of the baby carriage by moving said open-state locking member (4),
**characterized in that**
said baby carriage comprises a stopper (10) which is rotatably connected to said handrail member (7) and is operationally separate from said operating member (6), and is movable upward and downward between a first position in which it is directly in contact with said open-state locking member (4) to prohibit movement of said open-state locking member and a second position in which it is separate from said open-state locking member (4) to allow the movement of said open-state locking member (4).

2. The folding baby carriage according to claim 1, further comprising forcing means for forcing said stopper (10) to be brought to said first position.

3. The folding baby carriage according to claim 1, wherein said stopper (10) is brought to said first position by its own weight when the baby carriage is in the open state.

4. The folding baby carriage according to claim 1, wherein:
said stopper (10) is supported by said handrail member (7) so as to prohibit movement of said open state lock member (4) by abutting on the open-state locking member (4) at a lower position.

## Patentansprüche

1. Ein klappbarer Kinderwagen, umfassend:
ein Handleistenelement (7);
ein Handleistenstützelement (2), das drehbar mit einem hinteren Ende des Handleistenelements (7) verbunden ist;
ein Hinterbein (1) mit einem Hinterrad; und
ein Umlegelement (3) mit einem Ende, das drehbar mit dem Hinterbein (1) verbunden ist, während das andere Ende drehbar mit dem Handleistenstützelement (2) verbunden ist, wobei das Umlegelement (3) einen Umlegvorgang bei einer Überführung des Kinderwagens von einem offenen Zustand in einen geschlossenen Zustand durchführt;
ein Sicherungselement (4) für den offenen Zustand, welches nach oben und unten entlang dem Handleistenstützelement (2) beweglich ist und eine Bewegung des Umlegelements (3) verhindert, indem es mit dem Umlegelement (3) in einer unteren Position in Eingriff steht, um einen offenen Zustand des Kinderwagens zu sichern; und
ein Bedienelement (6), das eine Sperrung in dem offenen Zustand des Kinderwagens freigibt, indem es das Sicherungselement (4) für den offenen Zustand bewegt, **dadurch gekennzeichnet, dass**
der Kinderwagen einen Anschlag (10) umfaßt, der drehbar mit dem Handleistenelement (7) verbunden ist, und welcher in seiner Betriebsfunktion von dem Bedienelement (6) getrennt ist, und welcher nach oben und unten zwischen einer ersten Position, in welcher er in direktem Kontakt mit dem Sicherungselement (4) für den offenen Zustand steht, um den offenen Zustand des Kinderwagens zu sichern, und einer zweiten Position, in welcher er von dem Sicherungselement (4) für den offenen Zustand getrennt ist, um die Bewegung des Sicherungselements (4) für den offenen Zustand zu ermöglichen, beweglich ist.

2. Der klappbare Kinderwagen gemäß Anspruch 1, ferner umfassend:
Wirkmittel, die den Anschlag (10) dazu veranlassen, in die erste Position gebracht zu werden.

3. Der klappbare Kinderwagen gemäß Anspruch 1, wobei der Anschlag (10) aufgrund seines eigenen Gewichts in die erste Position gebracht wird, wenn sich der Kinderwagen in dem offenen Zustand befindet.

4. Der klappbare Kinderwagen gemäß Anspruch 1, wobei:
der Anschlag (10) durch das Handleistenelement (7) gestützt wird, so dass eine Bewegung des Sicherungselements (4) für den offenen Zustand durch Anstoßen des Sicherungselements (4) für den offenen Zustand in einer unteren Position verhindert wird.

## Revendications

1. Poussette pliable comprenant:
un élément de main courante (7);
un élément (2) supportant la main courante relié en rotation à une extrémité arrière dudit élément de main courante;
un pied arrière (1) ayant une roue arrière; et
un élément inverseur (3) ayant une extrémité reliée en rotation audit pied arrière (1) et l'autre extrémité reliée en rotation audit élément (2) supportant la main courante et effectuant une opération d'inversion conformément à la transition de l'état ouvert à l'état fermé de la poussette;
un élément de verrouillage à l'état ouvert (4) qui est mobile vers le haut et vers le bas le long dudit élément (2) supportant la main courante et qui empêche un mouvement dudit élément inverseur (3) en s'engageant avec l'élément inverseur (3) à une position inférieure pour verrouiller un état ouvert de la poussette; et;
un élément d'actionnement (6) qui libère un verrou à l'état ouvert de la poussette en déplaçant ledit élément de verrouillage à l'état ouvert (4), **caractérisé en ce que**
ladite poussette comprend une butée (10) qui est reliée en rotation audit élément de main courante (7) et est séparée de manière fonctionnelle dudit élément d'actionnement (6), et est mobile vers le haut et vers le bas entre une première position dans laquelle elle se met en contact direct avec ledit élément de verrouillage à l'état ouvert (4) pour empêcher le mouvement dudit élément de verrouillage à l'état ouvert et une deuxième position dans laquelle elle se sépare dudit élément de verrouillage à l'état ouvert (4) pour permettre le mouvement dudit élément de verrouillage à l'état ouvert (4).

2. Poussette pliable selon la revendication 1, comprenant de plus un moyen de pression pour presser ladite butée (10) dans le but de l'amener à ladite première position.

3. Poussette pliable selon la revendication 1, dans laquelle ladite butée (10) est amenée à ladite première position par son propre poids lorsque la poussette se trouve à l'état ouvert.

4. Poussette pliable selon la revendication 1, dans laquelle:
ladite butée (10) est supportée par ledit élément de main courante (7) de sorte à empêcher le mouvement dudit élément de verrouillage à l'état ouvert (4) en se mettant en butée contre l'élément de verrouillage à l'état ouvert (4) à une position inférieure.
